(19) Europäisches Patentamt
European Patent Office
Office européen des brevets

(11) EP 0 461 247 B1

(12) # FASCICULE DE BREVET EUROPEEN

(45) Date de publication et mention de la délivrance du brevet: **26.03.1997 Bulletin 1997/13**

(21) Numéro de dépôt: **91902723.5**

(22) Date de dépôt: **28.12.1990**

(51) Int Cl.[6]: **C08J 3/24**, C08K 5/56, C08K 5/59

(86) Numéro de dépôt international: **PCT/FR90/00966**

**WO 91/09899 (11.07.1991 Gazette 1991/15)**

(54) **PROCEDE DE RETICULATION DE (CO)POLYMERES ET COMPOSITIONS RETICULABLES**

VERFAHREN ZUM VERNETZEN VON (CO)POLYMEREN UND VERNETZBARE ZUSAMMENSETZUNGEN

(CO)POLYMER CROSSLINKING METHOD AND CROSSLINKABLE COMPOSITIONS

(84) Etats contractants désignés:
**AT BE CH DE DK ES FR GB GR IT LI LU NL SE**

(30) Priorité: **28.12.1989 FR 8917358**

(43) Date de publication de la demande: **18.12.1991 Bulletin 1991/51**

(73) Titulaires:
- **CENTRE NATIONAL DE LA RECHERCHE SCIENTIFIQUE (CNRS) 75794 Paris Cédex 16 (FR)**
- **SOTRA Industries 62140 Sainte-Austreberthe (FR)**

(72) Inventeurs:
- **GONDARD, Christian F-42300 Roanne (FR)**
- **MICHEL, Alain F-69004 Lyon (FR)**

(74) Mandataire: **Rinuy, Santarelli 14, avenue de la Grande Armée 75017 Paris (FR)**

(56) Documents cités:
**EP-A- 0 261 486**
**GB-A- 692 554**
**US-A- 3 767 615**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 461 247 B1

## Description

La présente invention concerne un procédé de réticulation de polymères ou copolymères, des compositions réticulables et leur application, notamment à la préparation d'objets conformés et les objets conformés ainsi obtenus.

La réticulation d'un polymère crée un réseau tridimensionnel, ce qui a pour conséquence d'augmenter la masse moléculaire. Les ponts de réticulation créent des liaisons intermoléculaires qui limitent alors les mouvements des chaînes polymères les unes par rapport aux autres et par voie de conséquence limitent fortement l'écoulement de ces chaînes. La réticulation d'un polymère thermoplastique a donc pour conséquence importante de repousser vers les hautes températures son seuil de thermoplasticité et d'améliorer sa résistance au fluage dans un domaine de température plus large et donc d'obtenir une meilleure stabilité dimensionnelle des objets élaborés.

Plusieurs procédés ont été proposés pour réticuler les thermoplastiques tels que polychlorure de vinyle et polyoléfine. Ils sont soit basés sur des réactions radicalaires, soit sur des réactions de condensation ou de substitution nucléophile. Par exemple en ce qui concerne le polychlorure de vinyle, on a essayé de le réticuler par voie photochimique, par bombardement électronique et par irradiation gamma en soumettant le polymère à ces radiations en présence d'un monomère plurifonctionnel tel que par exemple le diméthacrylate du tétraéthylèneglycol ou le triméthacrylate du triméthylolpropane, la réaction de réticulation étant assurée par le greffage et la polymérisation de ces monomères plurifonctionnels sur le squelette polymère. L'inconvénient majeur de ces procédés pour le polychlorure de vinyle est sa sensibilité à ces rayonnements qui induisent sa dégradation par élimination d'HCl en cascade. En outre, le mécanisme de réticulation est difficilement contrôlable car la polymérisation et le greffage des monomères fonctionnels sur le squelette polymère font intervenir des réactions de transfert.

Par ailleurs, pour obtenir une réticulation homogène et efficace, les quantités de monomère plurifonctionnel doivent être assez élevées, ce qui a pour conséquence de modifier les propriétés intrinsèques du polychlorure de vinyle réticulé. Enfin, les procédés par rayonnement gamma ou par bombardement électronique exigent un niveau technologique élevé et un appareillage onéreux.

Pour pallier ces inconvénients, on a proposé des procédés basés sur le greffage radicalaire de monomères fonctionnalisés initié par des peroxydes. Ces monomères fonctionnalisés peuvent comporter par exemple des groupements alcoxysilanes qui conduisent par hydrolyse et polycondensation à des groupements silanols et à la réticulation. C'est ainsi que le procédé connu sous le nom de procédé SIOPLAST de Dow Chemical a été développé pour la réticulation du polyéthylène, notamment dans les applications concernant les câbleries. Ce procédé présente cependant l'inconvénient de provoquer un gradient de densité de réticulation car celle-ci est gouvernée par la diffusion de l'eau dans l'objet fini, eau nécessaire à la réaction d'hydrolyse des fonctions alcoxysilanes.

Pour le polychlorure de vinyle, on a proposé des procédés faisant intervenir une réaction de substitution nucléophile des atomes de chlore par des thiolates alcalins ou alcalinoterreux ou des composés mixtes thiolate-carboxylate alcalins ou alcalinoterreux. Ces procédés sont bien adaptés principalement pour les mises en oeuvre par enduction mais ils le sont nettement moins pour les procédés par extrusion ou par calandrage. Leur inconvénient majeur réside toutefois dans le fait qu'ils sensibilisent fortement les matériaux réticulés à la dégradation photochimique induite par des sous-produits tels que des disulfures. Pour cette raison, le développement de ces procédés ne s'est pas généralisé.

Le brevet européen N° 0.032.587 propose la réticulation de copolymères d'esters acryliques par des diols ou des monoesters ou des diesters de diols en présence de titanates de formule générale $Ti(OR)_4$. Ces quatre groupes OR peuvent être identiques ou différents. De plus, ce procédé ne s'applique qu'aux copolymères d'alcènes et d'acrylates d'alcoyle et ne s'applique pas aux polymères halogénés tel que le polychlorure de vinyle, ni aux polymères à fonctions NH tels les polyamides.

Le brevet britannique N° 907.775 décrit un procédé de traitement du polyacétate de vinyle par un alcoolate métallique de formule $M(OR)_n$, M pouvant être en particulier le titane ou l'étain : la réaction s'effectue à 80°C dans un solvant et conduit à une substitution des radicaux acétates par des radicaux titanates ou stannates conduisant à la formation d'un polymère organométallique.

EP-A-0 261 486 décrit la synthèse d'oligomères pouvant servir de liant pour peinture. Un alcoolate d'étain est utilisé comme catalyseur de réaction entre des isocyanates et des alcools.

GB-A-692 554 et US-A-3 767 615 décrivent la stabilisation de solutions à base de copolymères du chlorure de polyvinyle à l'aide d'alcoolate d'étain. L'utilisation d'alcoolate d'étain permet la stabilisation des polymères chlorés, empêchant ainsi leur décoloration et leur dégradation.

On cherche donc toujours un procédé de réticulation de polymères ou de copolymères, qui soit simple, peu coûteux et soit mis en oeuvre en l'absence de solvant et par simple chauffage, de manière à être compatible avec les procédés classiques de mise en forme des polymères tels que l'extrusion, l'injection, le calandrage, l'enduction, le moulage et le thermoformage.

C'est pourquoi la présente invention a pour objet un procédé de réticulation de polymères ou copolymères, de mélanges de polymères ou copolymères comportant des groupements chlorés et/ou esters et/ou amides et/ou polycarbonates qui peuvent être intégrés aux opérations de mise en oeuvre industrielle telles que l'extrusion, le calandrage,

l'enduction, l'injection ou le moulage.

La présente demande a plus particulièrement pour objet un procédé de réticulation de polymères ou copolymères comportant des groupements chloro, ester,NH ou carbonate, caractérisé en ce que l'on fait réagir avec ledit (co)polymère entre 100 et 300°C et en l'absence de solvant, de savon métallique et de plastifiant un dérivé de type alcoolate organométallique des formules

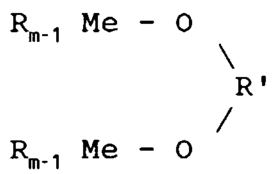 ou 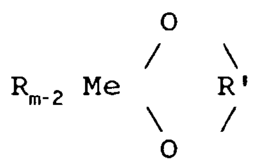

ou

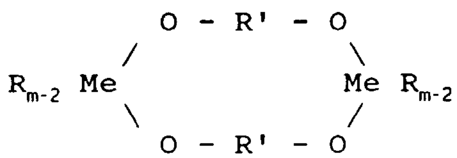 ou 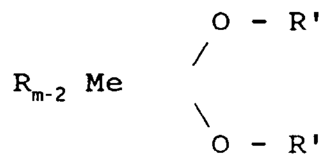

dans lesquelles :

Me représente un atome d'étain, de plomb, de bismuth ou d'antimoine,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 12 atomes de carbone éventuellement substitué par un radical méthyl, éthyl, méthoxy ou chloro, un radical aralcoyle renfermant de 7 à 14 atomes de carbone ou un radical cycloalcoylalcoyle renfermant de 4 à 8 atomes de carbone,
R' représente un radical dérivé d'un radical alcoyle linéaire ou ramifié comportant de 1 à 20 atomes de carbone, d'un radical aralcoyle renfermant de 8 à 15 atomes de carbone, d'un radical cycloalcoyle renfermant de 3 à 12 atomes de carbone, d'un radical cycloalcoylalcoyle renfermant de 4 à 8 atomes de carbone, d'un radical arylcycloalcoyle renfermant de 10 à 20 atomes de carbone ou d'une chaîne polymère, ledit radical R' étant éventuellement fonctionnalisé par une fonction éther, thioéther ou hydroxyle,
m est égal à 4 lorsque Me représente l'étain ou le plomb,
et m est égal à 5 lorsque Me représente le bismuth ou l'antimoine.

Les radicaux alcoyle linéaires ou ramifiés comportant de 1 à 20 atomes de carbone, aralcoyle comportant de 8 à 15 atomes de carbone, cycloalcoyle comportant de 3 à 12 atomes de carbone, arylcycloalcoyle comportant de 10 à 20 atomes de carbone ou la chaîne polymère peuvent éventuellement être fonctionnalisés c'est-à-dire substitués par une fonction telle qu'éther ou thioéther, hydroxy, qui n'est pas susceptible de détruire les réactifs mis en oeuvre.

Le radical alcoyle linéaire ou ramifié désigne de préférence un radical méthyle, n-butyle ou n-octyle en ce qui concerne R, un radical méthyle, éthyle, éthylène, propyle ou propylène en ce qui concerne R'.

L'expression "radical cycloalkyle renfermant de 3 à 6 atomes de carbone" désigne de préférence un radical cyclopropyle ou cyclobutyle.

L'expression "radical aryle renfermant de 6 à 12 atomes de carbone" désigne de préférence un radical phényle.

L'expression "radical aralcoyle renfermant de 7 à 14 atomes de carbone" désigne de préférence un radical benzyle ou phénéthyle.

L'expression "radical cycloalcoylalcoyle renfermant de 4 à 8 atomes de carbone" désigne de préférence un radical cyclopropylméthyle.

Lorsqu'un aryle est substitué, il est de préférence substitué par un radical éthyle, méthyle, méthoxy, chlore.

Lorsque n = 1, 2, 3 ou 4, en fonction de la nature du métal, selon la présente invention, l'alcoolate métallique dérive :

- soit d'un monoalcool et il est de type polyalcoxymétal et avantageusement dialcoxymétal et les atomes d'oxygène liés à l'atome de métal ne sont pas liés entre eux par un radical hydrocarboné ou d'autre nature ;
- soit d'un polyol, avantageusement d'un diol, et il est alors de type cyclique, au moins deux atomes d'oxygène liés

à l'atome de métal étant reliés par un reste hydrocarboné selon les formules générales précitées.

Par alcoolate organométallique de l'étain, du plomb, de l'antimoine et du bismuth, on entend que l'atome de métal est lié à un atome de carbone du radical R par une liaison covalente ; dans certains cas, le radical R peut être commun à plusieurs atomes métalliques. Les radicaux R et R' peuvent être, selon l'invention, différents ou identiques.

Selon la présente invention, les familles de polymères ou de copolymères ainsi que leurs mélanges réticulables par les alcoolates organométalliques de l'étain, du plomb, de l'antimoine et du bismuth sont :

- les polymères chlorés et copolymères chlorés tels que par exemple et de façon non limitative le polychlorure de vinyle, le polychlorure de vinylidène, le polychloroprène, les polyéthylènes chlorés, les caoutchoucs chlorés ;
- les polyesters de polyacide ;
- les polymères et copolymères d'esters acryliques et méthacryliques tels que les polyacrylates et méthacrylates de méthyle, d'éthyle, de butyle et d'éthyl-2-hexyle, les copolymères d'esters acryliques ou méthacryliques avec le chlorure de vinyle et l'éthylène et les copolymères greffés polypropylène acrylate d'éthyle, de butyle ou d'éthyl-2-hexyle ;
- les esters de polyols ;
- les polymères et copolymères de l'acétate de vinyle tels que par exemple et de façon non limitative les copolymères chlorure de vinyle - acétate de vinyle, les copolymères éthylène - acétate de vinyle, les copolymères greffés polypropylène - acétate de vinyle ;
- les polymères et copolymères comportant des fonctions NH, notamment les polyamides et copolyamides, les polyacrylamides et copolymères à base d'acrylamide, les polyuréthannes, les polyurées ;
- les polyesters tels que le polyéthylène téréphtalate ou le polybutylène téréphtalate ;
- les polycarbonates ;

Selon la présente invention, pour réaliser la réticulation des (co)polymères chlorés, on peut faire réagir directement ledit (co)polymère chloré avec un alcoolate organométallique de type acyclique tel que de type : $R'(O\text{-}Me\text{-}R)_2$, R, R' et Me ayant la signification déjà indiquée, ou de type cyclique (oxycycloalcoyle) métal. Dans ce dernier cas, on utilise de préférence un alcoolate comportant deux atomes d'oxygène liés à l'atome de métal et reliés entre eux par un groupement hydrocarboné R' apporté par le polyol, de formule générale :

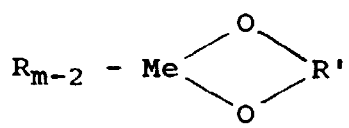

dans laquelle R, R', Me et m ont la signification déjà indiquée.

Selon l'invention, et avantageusement, on utilise un alcoolate organométallique dérivé de l'éthylèneglycol en tant que polyol ; dans ce cas, $R' = (CH_2)_2$.

Selon l'invention, l'alcoolate organométallique peut être sous forme polymère, de préférence dimère, non cyclisée ou cyclisée, et dans ce cas avoir comme formule type avec l'éthylèneglycol :

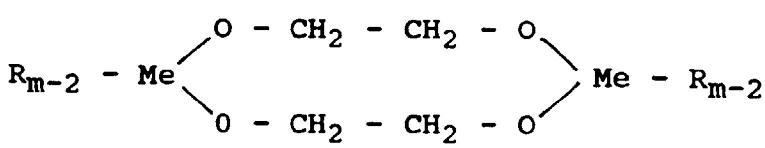

dans laquelle R et m ont la signification déjà indiquée.

Selon l'invention, lorsque l'alcoolate organométallique dérive de l'éthylèneglycol ou d'un diol supérieur, et selon la valeur de la valence du métal Me, un ou deux des radicaux R peuvent être liés à l'atome Me par l'intermédiaire d'un atome d'oxygène.

L'alcoolate organométallique peut également, selon la présente invention, être formé in situ en mélangeant préalablement à la mise en forme le (co)polymère chloré, l'oxyde organométallique et l'ester de polyol, tel que par exemple le carbonate de l'éthylèneglycol ou le triacétate de triméthylolpropane. L'oxyde organométallique pourra être par exemple de type $R_2MeO$, lorsque Me = Sn ou Pb et de type $R_3MeO$ lorsque Me = Sb ou Bi.

L'alcoolate organométallique peut également, selon la présente invention, être préparé in situ en mélangeant préalablement à la phase de mise en forme le (co)polymère chloré, un halogénure organométallique, de préférence

un chlorure et un alcoolate alcalin ou alcalinoterreux du polyol, avantageusement l'éthylèneglycol. L'halogénure organométallique pourra être par exemple de type $R_2MeCl_2$ lorsque Me = Sn ou Pb et de type $R_3MeCl_2$ lorsque Me = Sb ou Bi, R ayant la signification définie précédemment.

L'alcoolate alcalinoterreux sera de préférence un alcoolate de calcium ou de baryum.

Selon la présente invention, pour réaliser la réticulation des (co)polymères d'esters acryliques et méthacryliques, des polyesters de polyacide, des (co)polymères de l'acétate de vinyle, des polyesters de polyol, des (co)polyamides, du polyacrylamide et copolymères d'acrylamide ou de tout (co)polymère comportant des groupements NH, on peut faire réagir ces (co)polymères soit comme précédemment, soit avec un alcoolate organométallique de type cyclique (oxacycloalcoyle, oxacycloalcoylaryle), soit avec un alcoolate organométallique de type polyalcoxymétal dérivant d'un monoalcool et avantageusement de type dialcoxymétal de formule générale :

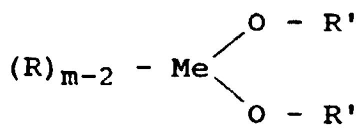

dans laquelle R, R', Me et m ont la signification déjà indiquée.

Selon la présente invention, pour réaliser la réticulation des (co)polymères contenant des fonctions esters, l'agent réticulant de nature alcoolate organométallique peut être préparé in situ avant la mise en forme. Dans le cas où les (co)polymères contenant les fonctions esters dérivent d'un polyol ou sont plus particulièrement des (co)polymères de l'acétate de vinyle, on fera réagir avec ces (co)polymères un oxyde organométallique en présence d'un polyester de polyacide et avantageusement en présence d'un diester d'un $\alpha$-w-diacide tel que, de façon non limitative, le phtalate de diméthyle ou de diéthyle, l'adipate de diméthyle, le sébaçate de diméthyle.

Toujours selon l'invention, dans le cas où les (co)polymères contenant les fonctions esters dérivent d'un polyacide et sont plus particulièrement à titre d'exemple non limitatif des (co)polymères d'esters acryliques, on fera réagir ces (co)polymères avec un oxyde organométallique en présence d'un polyester de polyol et avantageusement en présence d'un ester $\alpha$-w-diol tel que l'éthylèneglycol ou en présence d'un triester du triméthylolpropane tel que par exemple le triacétate de triméthylolpropane ou d'un polyester dérivé du pentaérythritol.

La réticulation des (co)polymères de l'acétate de vinyle et plus généralement des polyols est réalisée à l'aide d'au moins un alcoolate formé par interaction des fonctions acétate avec un oxyde organométallique, par exemple de formule $R_2MeO$, si Me = Sn ou Pb ou $R_3MeO$, si Me = Sb ou Bi.

Selon la présente invention, les (co)polymères comportant des fonctions NH tels que les polyamides, copolyamides, polyacrylamides, polyuréthannes ou polyurées peuvent également être réticulés par les alcoolates organométalliques de l'étain, du plomb, de l'antimoine et du bismuth, par les dialcoxymétaux dérivant soit d'un monoalcool de formule générale R'OH ou d'un polyol, par exemple un diol de formule générale OHR'OH, R' ayant la signification déjà indiquée, l'alcoolate organométallique étant préalablement synthétisé avant son mélange au polymère ou synthétisé in situ.

Selon la présente invention, les alcoolates organométalliques de l'étain, du plomb, de l'antimoine et du bismuth permettent de réaliser la co-réticulation de mélanges de (co)polymères contenant des atomes de chlore, des groupements esters, des fonctions NH telles que amides ou uréthanes et des fonctions carbonates. A titre d'exemple et de façon non limitative, on peut citer :

- la co-réticulation du polychlorure de vinyle et des copolymères de l'acétate de vinyle comme par exemple les copolymères chlorure de vinyle-acétate de vinyle ou les copolymères éthylène-acétate de vinyle. Dans ce cas, et avantageusement, l'alcoolate organométallique est synthétisé in situ par mélange du polychlorure de vinyle et des copolymères de l'acétate de vinyle avec un oxyde organométallique de l'étain, du plomb, de l'antimoine ou du bismuth ;
- la co-réticulation des copolymères du chlorure de vinyle et de l'acétate de vinyle et des copolymères de chlorure de vinyle et de l'acrylate d'éthyle. Dans ce cas, et avantageusement, la co-réticulation est réalisée en mélangeant aux copolymères un oxyde organométallique de l'étain, du plomb, de l'antimoine ou du bismuth ;
- la co-réticulation des copolymères de l'éthylène et de l'acétate de vinyle et des copolymères de l'éthylène et de l'acrylate d'éthyle ou de butyle. Dans ce cas, et comme précédemment, la co-réticulation est réalisée avantageusement par addition aux copolymères d'un oxyde organométallique ;
- la co-réticulation de copolymères greffés du polypropylène avec l'acétate de vinyle et l'acrylate de butyle. Dans ce cas également, et comme précédemment, la co-réticulation est obtenue avantageusement par mélange aux copolymères d'un oxyde organométallique ;
- la co-réticulation de copolymères greffés polypropylène-acrylate de butyle et de copolymères éthylène acétate de

vinyle peut être réalisée par les alcoolates organométalliques de l'étain, du plomb, de l'antimoine et du bismuth par génération in situ de ces alcoolates en mélangeant à ces copolymères un oxyde organométallique de ces métaux ;

- la co-réticulation des polyamides et des copolymères de l'éthylène et de l'acétate de vinyle ou de l'éthylène et des esters acryliques, tel que par exemple l'acrylate d'éthyle, peut être réalisée par les alcoolates organométalliques des métaux étain, plomb, antimoine ou bismuth, l'alcoolate étant synthétisé in situ durant l'étape de mise en forme. A titre d'exemples pour la co-réticulation des polyamides et des copolymères de l'acétate de vinyle, on utilisera un alcoolate organométallique dérivant d'un monoalcool comme par exemple le méthanol ou l'éthanol et de formule générale :

$$R_{m-2}\ Me(OR')_2$$

dans laquelle R, R', Me et m ont la signification déjà indiquée,

et pour la co-réticulation d'un polyamide avec un copolymère de l'éthylène et d'un ester acrylique, on utilisera un alcoolate organométallique dérivant d'un diol synthétisé in situ en ajoutant par exemple au mélange de polymères l'éthylèneglycol et un oxyde organométallique de formule générale $R_{m-2}$ Me-O avec R, Me et m définis comme précédemment.

Selon la présente invention, et avantageusement, les quantités molaires des alcoolates organométalliques de l'étain, du plomb, de l'antimoine ou du bismuth mises en jeu varient en fonction de la densité de réticulation désirée, compte tenu des applications et elles se situent de préférence dans le domaine de concentrations $10^{-2}$ -$5.10^{-1}$ mole par kg de polymère. A des concentrations plus élevées que $5.10^{-1}$ mole par kg de polymère, les densités de réticulation obtenues peuvent avoir pour conséquence de fragiliser le matériau, cet inconvénient étant plus ou moins marqué en fonction des applications et peut être réduit par des choix judicieux de formulations.

Le procédé ainsi décrit permet de réticuler ou de co-réticuler préférentiellement, et dans des conditions de mise en oeuvre industrielles telles que l'extrusion, le calandrage, l'injection, l'enduction ou le moulage:

- les polymères chlorés et particulièrement le polychlorure de vinyle homopolymère et ses copolymères notamment de l'acétate de vinyle et des esters acryliques ;
- les copolymères de l'éthylène et de l'acétate de vinyle ou des esters acryliques ;
- les polyamides ;
- les polycarbonates ;
- les copolymères greffés polypropylène acétate de vinyle ou esters acryliques. Dans ce cas particulier, la présente invention apparaît comme une voie originale pour réticuler le polypropylène ;
- les mélanges de polychlorure de vinyle et de copolymères greffés polypropylène-acétate de vinyle ou esters acryliques ;
- les mélanges de polychlorure de vinyle et de polyamide ;
- les mélanges de polyamides et de copolymères d'éthylène - acétate de vinyle ou éthylène-esters acryliques ;
- les mélanges de polyamides et de polyéthylène chloré ;
- les mélanges de copolymères greffés polypropylène-acétate de vinyle et de copolymères éthylène-esters acryliques ;
- les mélanges de copolymères greffés polypropylène-esters acryliques et de copolymères éthylène-acétate de vinyle.

L'invention a également pour objet des compositions réticulables pouvant être mises en oeuvre par procédé selon la présente invention.

C'est pourquoi la présente demande a aussi plus particulièrement pour objet les compositions réticulables, caractérisées en ce qu'elles comprennent un (co)polymère comportant des groupements chloro, ester, NH ou carbonate, et un dérivé de type alcoolate organométallique des formules

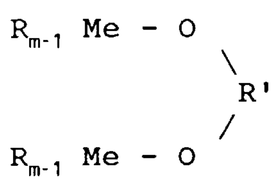

ou

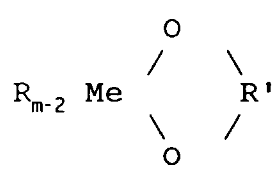

ou

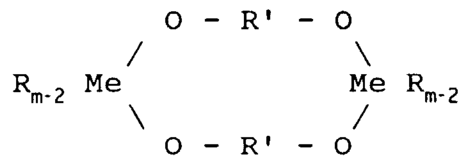

ou

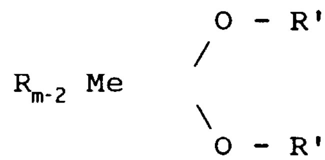

dans lesquelles :

Me représente un atome d'étain, de plomb, de bismuth ou d'antimoine,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 12 atomes de carbone éventuellement substitué par un radical méthyl, éthyl, méthoxy ou chloro, un radical aralcoyle renfermant de 7 à 14 atomes de carbone ou un radical cycloalcoylalcoyle renfermant de 4 à 8 atomes de carbone,
R' représente un radical dérivé d'un radical alcoyle linéaire ou ramifié comportant de 1 à 20 atomes de carbone, d'un radical aralcoyle renfermant de 8 à 15 atomes de carbone, d'un radical cycloalcoylalcoyle renfermant de 4 à 8 atomes de carbone, d'un radical cycloalcoyle renfermant de 3 à 12 atomes de carbone, un radical arylcycloalcoyle renfermant de 10 à 20 atomes de carbone ou une chaîne polymère, éventuellement fonctionnalisée par une fonction éther, thioéther ou hydroxyle,
m est égal à 4, lorsque Me représente l'étain ou le plomb,
et m est égal à 5 lorsque Me représente le bismuth ou l'antimoine.

La présente demande a notamment pour objet les compositions réticulables, caractérisées en ce qu'elles renferment un (co)polymère chloré ;

- celles qui renferment un (co)polymère d'ester acrylique ou méthacrylique ;
- celles qui renferment un (co)polymère de l'acétate de vinyle ;
- celles qui renferment un (co)polymère comportant des fonctions NH ;
- celles qui renferment un polycarbonate ;
- celles qui renferment un polyester ;
- celles qui renferment un (co)polymère de polychlorure de vinyle ;
- celles qui renferment un copolymère éthylène-acétate de vinyle ;
- celles qui renferment un polypropylène chloré ou greffé acétate de vinyle et/ou ester acrylique ou méthacrylique;
- et celles qui renferment un polyamide.

La présente demande a aussi notamment pour objet les compositions réticulables, caractérisées en ce qu'elles comprennent un (co)polymère chloré, un halogénure organométallique de l'étain, du plomb, de l'antimoine ou du bismuth et un alcoolate alcalin ou alcalinoterreux d'un polyol, de même que celles qui comprennent un (co)polymère chloré, un oxyde organométallique de l'étain, du plomb, de l'antimoine ou du bismuth et un polyol ou ester de polyol ; ainsi que celles qui comprennent un (co)polymère chloré, un oxyde organométallique de l'étain, de l'antimoine, du plomb ou du bismuth et un (co)polymère dont la chaîne comporte des fonctions hydroxyle et/ou ester tels que par exemple des unités acétate de vinyle ou esters acryliques ou méthacryliques.

Elle a enfin notamment pour objet les compositions réticulables, caractérisées en ce qu'elles comprennent un (co) polymère de l'acétate de vinyle ou d'un ester de polyol et un alcoolate d'étain, de plomb, d'antimoine ou de bismuth, cet alcoolate pouvant être cyclique ou non cyclique selon la définition de la présente invention et comportant au moins deux fonctions alcoxy ; celles caractérisées en ce qu'elles comprennent un polymère ou (co)polymère d'esters acryliques ou méthacryliques ou esters de polyacide et un alcoolate organométallique de l'étain, du plomb, de l'antimoine ou du bismuth obtenu par réaction d'un oxyde organométallique de l'étain, du plomb, de l'antimoine ou du bismuth avec un polyol ; et celles caractérisées en ce qu'elles comprennent un (co)polymère de l'acétate de vinyle et/ou d'un ester de polyol, un (co)polymère d'esters acryliques ou méthacryliques et/ou d'un ester de polyacide, et un oxyde organométallique de l'étain, de l'antimoine, du plomb ou du bismuth.

Les différents constituants de ces compositions ont déjà été décrits plus en détail ci-dessus. Lorsque l'on dit qu'une composition comprend un certain produit, l'on entend que celle-ci renferme au moins un produit de ce type, par exemple au moins un polymère chloré.

Les compositions selon l'invention peuvent de plus contenir les adjuvants habituellement utilisés dans l'industrie des matières plastiques, charges, plastifiants, antioxydants, stabilisants, pigments, lubrifiants, etc. Ces constituants

peuvent être ajoutés dès le début du procédé lors de l'étape de mélange des produits réticulables.

Parmi les charges, on peut citer par exemple les carbonates de calcium, le talc ou l'oxyde de titane.

Parmi les plastifiants, on peut citer par exemple les phtalates tels que le phtalate de di(éthyl-2-hexyle).

Comme stabilisants, on peut citer par exemple les savons métalliques notamment de plomb, de calcium ou de l'étain.

Parmi les pigments, on peut citer par exemple le noir de carbone, l'oxyde de titane ou le bleu outremer.

Parmi les lubrifiants, on peut citer par exemple les dérivés de l'acide stéarique tel que le stéarate de magnésium ou les paraffines non chlorées.

Selon un avantage de la présente invention, la température de réticulation peut être adaptée en fonction du procédé de mise en oeuvre des compositions relevant de cette invention de façon à ce que la réticulation ne soit pas trop avancée dans la phase de mise en forme des procédés classiques tels que l'extrusion, le calandrage, l'injection, l'enduction et le moulage, la réticulation étant terminée après l'étape de mise en forme, par exemple dans un conformateur ou à l'intérieur d'un moule dans le cas de l'injection, en jouant sur les paramètres temps et température.

Un autre avantage selon l'invention est le contrôle et l'adaptation de la densité de réticulation en fonction des propriétés recherchées par une maîtrise de la durée de réaction, de la concentration des espèces réactives de la composition réticulable, notamment de la concentration de l'alcoolate organométallique et de la composition des (co) polymères mis en oeuvre à base d'acétate de vinyle ou d'esters acryliques ou méthacryliques.

Selon l'invention, les propriétés de tenue au fluage et de stabilité dimensionnelle des objets polymères façonnés seront nettement améliorées après réticulation. Selon l'invention, la co-réticulation de mélanges de (co)polymères chlorés avec des polyamides est également un moyen de stabiliser ces mélanges vis-à-vis des phénomènes de démixtion.

C'est pourquoi la présente demande a également pour objet les mélanges alliages ou compositions mixtes des familles de (co)polymères ci-dessus mentionnés.

On peut citer par exemple les mélanges de (co)polymères chlorés avec les copolymères éthylène-acétate de vinyle et les mélanges de polyamide et des (co)polymères éthylène-acétate de vinyle ou éthylène-esters acryliques.

La présente demande vise enfin des objets conformés, caractérisés en ce qu'ils sont préparés à partir des produits obtenus par la mise en oeuvre du procédé ci-dessus décrit, de même que les objets conformés constitués d'une composition telle que définie ci-dessus.

Les exemples qui suivent illustrent l'invention sans toutefois la limiter.

La réticulation des polymères, copolymères, mélanges de polymères et/ou de copolymères et des compositions réticulables selon l'invention est caractérisée soit à l'aide d'un plastographe Haake en phase dynamique, équipé d'un mélangeur interne de capacité 60 ml type Rheomix 600. Cet appareil permet de suivre en continu l'évolution du couple résistant exercé par le polymère sur les pales du malaxeur. La réticulation du polymère entraîne une augmentation de la viscosité à l'état fondu et par conséquent une augmentation du couple observé après la gélification ou la fusion du polymère. La variation du couple C entre le couple atteint après gélification ou fusion (Cmin) et le couple maximum (Cmax) atteint en fin d'expérience est un critère de réticulation.

Deux autres critères ont été utilisés pour évaluer la cinétique de réaction en phase dynamique : le temps Ti au bout duquel se produit une augmentation du couple résistant, caractéristique d'une réticulation significative, et la vitesse d'augmentation du couple entre la valeur maximale (Cmax) et minimale (Cmin) assimilée à la vitesse moyenne de réticulation.

Un autre critère caractérisant le degré de réticulation d'un polymère est le pourcentage de polymère insoluble dans un de ses solvants, par exemple le tétrahydrofuranne (THF) pour le polychlorure de vinyle et ses copolymères et le xylène à 140°C pour les copolymères de l'éthylène et du polypropylène.

La réticulation des polymères, copolymères et mélanges de polymères ou de copolymères et des compositions selon l'invention a également été caractérisée en conditions statiques à l'aide d'une presse à plateaux chauffant après gélification ou fusion dans le malaxeur interne Rheomix 600 équipant le plastographe Haake pour obtenir une bonne homogénéisation des réactifs et des (co)polymères. Cette première phase étant réalisée, le matériau gélifié ou fondu est transféré dans un moule rectangulaire de 3 mm d'épaisseur placé lui-même entre les plateaux d'une presse chauffante.

Après un temps de cuisson à une température donnée, généralement 5 minutes, la plaque moulée est refroidie rapidement. Le degré de réticulation dans ces conditions est évalué par le taux de polymère insoluble dans un de ses solvants et/ou par le taux de gonflement dans ce solvant, défini par la relation:

$$G = \frac{(Mg - Mf)/\rho s + Mp/\rho P}{Mp/\rho P}$$

Mg étant la masse de l'échantillon gonflé, Mp la masse du polymère insoluble, ρs et ρp étant les masses volumiques respectivement du solvant et du polymère. Pour le $THF_{\rho s}$ = 0,948 g/cm3 et pour le polychlorure de vinyle ρp = 1,38g/

$cm^3$. Pour l'ensemble des exemples décrits, les alcoolates organométalliques de l'étain, du plomb, de l'antimoine ou du bismuth sont synthétisés préalablement à leur introduction dans le polymère ou au contraire in situ.

Lorsqu'ils sont synthétisés préalablement, on fait réagir généralement un monoalcool ou un polyol avec un oxyde organométallique. En revanche, lorsqu'ils sont synthétisés in situ, on peut faire réagir :

- soit un oxyde organométallique de l'étain, du plomb, de l'antimoine ou du bismuth avec un monoalcool ou un polyol comme précédemment mais au sein de la matrice polymère;
- soit un halogénure organométallique de l'étain, du plomb, de l'antimoine ou du bismuth avec un alcoolate alcalin ou alcalinoterreux de monoalcool ou polyol ;
- soit un oxyde organométallique de l'étain, du plomb, de l'antimoine ou du bismuth avec un ester de polyol de nature polymère ou non. Lorsque l'ester de polyol est un polymère, l'alcoolate est lui-même de nature polymère.

Le tableau I rassemble les différents exemples concernant la réticulation du polychlorure de vinyle par les alcoolates organométalliques de l'étain et du plomb selon l'invention, ceux-ci étant synthétisés préalablement à leur mise en oeuvre ou in situ dans la matrice polymère au cours des opérations de mise en forme du matériau. Les essais décrits dans ce tableau ont été réalisés dans un mélangeur interne Rheomix 600 équipant un plastographe Haake, la vitesse de rotation étant de 50 tours par minute. Les stabilisants utilisés sont soit le dioctylétain dithioglycolate d'isooctyle, dénommé stabilisant étain, à raison de 2 g pour 100 g de polymère, soit un mélange de stéarate de cadmium (1 g pour 100 g de polymère) et de stéarate de baryum (1,2 g pour 100 g de polymère), dénommé stabilisant Cd-Ba. Les températures affichées des parois du malaxeur sont généralement 200 ou 205°C. Le tableau I contient les principales caractéristiques de la réticulation du polychlorure de vinyle en phase dynamique, temps d'enduction Ti avant le début d'une réticulation significative, le temps de malaxage total Tm, la variation du couple C et la vitesse moyenne de réticulation $V_R$.

Tableau I :

| Réticulation du polychlorure de vinyle en phase dynamique par les alcoolates organométalliques de l'étain | | | | | | | | |
|---|---|---|---|---|---|---|---|---|
| Exemple N° | T (°C) | Stabilisant | Système Réticulant | | $T_m$ (mn) | $T_i$ (mn) | ΔC (N.m) | $V_R$(N.m $mn^{-1}$) |
| | | | Nature | Concentration (mole.$Kg^{-1}$) | | | | |
| 1 | 205 | étain | éthanedioxy-1,2-dibutylétain | 0,136 | 5 | 3,7 | 3 | 2,4 |
| 2 | 205 | étain | propanedioxy-1,2-dibutylétain | 0,136 | 8,5 | 4 | 2,8 | 0,62 |
| 3 | 200 | étain | éthylène glycol | 0,0125 | 5,5 | 3,5 | 2,2 | 1,1 |
| | | | oxyde de dibutylétain | 0,05 | | | | |
| 4 | 200 | étain | 1-1-1-trimethylol propane | 0,39 | 8,5 | 7 | 3 | 2,0 |
| | | | oxyde de dibutylétain | 0,28 | | | | |
| 5 | 205 | étain | dichlorodibutylétain | 0,28 | 4 | 3,5 | 4,6 | 3,0 |
| | | | éthylène glycolate de calcium | 0,68 | | | | |
| 6 | 205 | étain | éthylène carbonate | 0,27 | 5 | 3 | 28 | 14 |
| | | | oxyde de dibutylétain | 0,27 | | | | |
| 7 | 200 | Cd-Ba | éthylène glycol | 0,185 | 14 | 6 | 3,9 | 0,49 |
| | | | oxyde de diphénylplomb | 0,185 | | | | |
| 8 | 205 | étain | triacetate du triméthylolpropane | 0,27 | 12 | 8 | 3 | 0,75 |
| | | | oxyde de dibutylétain | 0,27 | | | | |

Pour tous les exemples décrits dans ce tableau, le pourcentage de polymère insoluble dans le tétrahydrofuranne est supérieur à 50 % à la température ambiante.

Il est intéressant de noter la vitesse de réticulation élevée pour l'exemple 6 avec le système réticulant carbonate d'éthylène-oxyde de dibutylétain conduisant à la formation in situ de l'éthanedioxy-1,2-dibutylétain avec libération de $CO_2$ qui peut être utilisé pour élaborer des mousses réticulées, par exemple et de façon non limitative, dans un procédé d'enduction.

Le tableau II regroupe les exemples de réticulation du polychlorure de vinyle des alcoolates organométalliques de l'étain en phase statique.

Pour tous ces exemples, le polymère est gélifié à l'aide du mélangeur interne Rheomix 600 équipant un plastographe Haake à 200°C, la vitesse de rotation étant de 50 tours par minute. Après gélification, le polymère gélifié avec son système réticulant est transféré dans un moule placé entre les plateaux d'une presse dont la température a été portée préalablement à 205°C. Le stabilisant utilisé pour ces essais est comme précédemment le dioctylétain dithioglycolate d'isooctyle. Une pression de 10 bars est maintenue sur le matériau durant l'essai. L'efficacité du système réticulant est alors appréciée par la détermination du taux de gonflement dans le tétrahydrofuranne (THF) après 48 heures d'immersion à la température ambiante et/ou par le taux pondéral de polymère insoluble dans ce solvant à la température ambiante.

Le tableau III montre qu'il est possible de réticuler le polyéthylène chloré (taux de chlore par exemple de 36 %) par l'éthanedioxy-1,2- dibutylétain tout comme le polychlorure de vinyle. L'essai décrit dans ce tableau a été réalisé en mélangeur interne Rheomix 600 en présence de dioctylétain dithioglycolate d'isooctyle comme stabilisant thermique à raison de 2 g pour 100 g de polymère, la température des parois du malaxeur étant de 205°C.

Les tableaux IV, V et VI regroupent les exemples montrant que les copolymères du chlorure de vinyle et de l'acétate de vinyle sont réticulables selon l'invention par les alcoolates organométalliques de l'étain, du plomb, de l'antimoine et du bismuth générés in situ par interaction d'un oxyde organométallique de ces métaux avec les fonctions esters des séquences polyacétate de vinyle. Pour ces essais, le stabilisant utilisé est, comme précédemment, le dioctylétain dithioglycolate d'isooctyle à raison de 2 g pour 100 g de copolymère.

Pour les essais (tableaux IV et V), en conditions dynamiques, les parois du malaxeur Rheomix 600 sont maintenues à 200°C et la vitesse de rotation est de 50 tours par minute. Pour les essais de réticulation en phase statique sous presse (tableau VI), la température des plateaux est de 205°C et le polymère avec son système réticulant est maintenu sous une pression de 10 bars durant 5 minutes, la gélification du mélange copolymère-système réticulant étant réalisée préalablement à l'aide du mélangeur interne Rheomix 600 à 200°C. Le copolymère chlorure de vinyle-acétate de vinyle comporte 11 % en poids d'unité acétate de vinyle.

*TABLEAU II - Réticulation du polychlorure de vinyle en phase statique à 205°C par les alcoolates organométalliques de l'étain*

| Exemple N° | éthanedioxy-1,2-dibutyl-étain | éthylène Glycolate : de calcium | Sn/Ca | Oxyde de dibutylétain | 1-1-1-trimethylol propane | triacétate du 1,1,1-triméthylolpropane | Temps (mn) | Taux d' insoluble THF (%) | Taux de gonflement THF (%) |
|---|---|---|---|---|---|---|---|---|---|
| 9 | 0,274 | 0 | | - | - | - | 3 | 73 | - |
| 10 | 0,171 | 0,50 | 0,34 | - | - | - | 4 | > 95 | 21,8 |
| 11 | 0,171 | 0,50 | 0,34 | - | - | - | 5 | > 95 | 9,0 |
| 12 | 0,274 | 0,30 | 0,91 | - | - | - | 4 | > 95 | 12,3 |
| 13 | 0,274 | 0,30 | 0,91 | - | - | - | 5 | > 95 | 8,2 |
| 14 | 0,274 | 0,40 | 0,68 | - | - | - | 4 | > 95 | 8,4 |
| 15 | 0,274 | 0,40 | 0,68 | - | - | - | 5 | > 95 | 7,1 |
| 16 | - | - | | 0,28 | 0,39 | - | 5 | 85 | - |
| 17 | - | - | | 0,27 | - | 0,27 | 5 | 79 | - |

TABLEAU III -

| *Réticulation du polyéthylène chloré par les alcoolates organométalliques de l'étain en phase dynamique* | | | | | |
|---|---|---|---|---|---|
| Exemple | Ethanedioxy-1,2-dibutylétain mole.$kg^{-1}$ | Tm (mn) | Ti (mn) | ΔC (N.m) | VR (Nm.min-1) |
| 18 | 0,274 | 7 | 4 | 5,5 | 1,8 |

TABLEAU IV -

*Réticulation des copolymères du chlorure de vinyle et de l'acétate de vinyle en phase dynamique par les alcoolates organométalliques de l'étain, du plomb et du bismuth*

| Exemple | Système réticulant mole $Kg^{-1}$ | | | | | | | Acétate (%) | $T_m$ (mn) | $T_i$ (mn) | ΔC (N.m) | $V_R$ (N.m. $mn^{-1}$) |
|---|---|---|---|---|---|---|---|---|---|---|---|---|
| | Oxyde d'étain : | | | | | Oxyde diphénylplomb | Oxyde de triphényl bismuth | | | | | |
| | dioctyle | dibutyle | diphenyle | mono butyle | tri butyle | | | | | | | |
| 19 | 0,111 | - | - | - | - | - | - | 4 | 12 | 5,5 | 8 | 1,2 |
| 20 | 0,081 | - | - | - | - | - | - | 11 | 10 | 5,5 | 20 | 4,4 |
| 21 | | 0,081 | - | - | - | - | - | 11 | 6 | 2,5 | 22 | 6,3 |
| 22 | - | - | 0,081 | - | - | - | - | 11 | 9 | 4,5 | 12 | 2,7 |
| 23 | - | - | - | 0,081 | - | - | - | 11 | 8 | 4 | 20 | 5,0 |
| 24 | - | - | - | 0,135 | - | - | - | 11 | 8 | 4 | 31 | 7,8 |
| 25 | - | - | - | - | 0,067 | - | - | 11 | 8,5 | 4,5 | 9,4 | 2,3 |
| 26 | - | - | - | - | - | 0,081 | - | 11 | 4 | 3 | 1,2 | 1,2 |
| 27 | - | - | - | - | - | - | 0,081 | 11 | 2,8 | 1,4 | 2,8 | 2,0 |

TABLEAU V -

| Réticulation des copolymères du chlorure de vinyle et de l'acétate de vinyle en phase dynamique par les alcoolates organométalliques de l'étain | | | | | | | | |
|---|---|---|---|---|---|---|---|---|
| Exemple | Système réticulant : mole $kg^{-1}$ | | | Acétate (%) | $T_m$ (mn) | $T_i$ (mn) | ΔC (N.m) | $V_R$ (N.m. $mn^{-1}$) |
| | Oxyde de dioctylétain | Phtalate de dimethyle | Sébaçate de dimethyle | | | | | |
| 28 | 0,083 | 0,0524 | - | 4 | 12,5 | 4,5 | 11 | 1,4 |
| 29 | 0,083 | -- | 0,0524 | 4 | 13,5 | 8 | 18 | 3,2 |
| 30 | 0,083 | 0,0524 | - | 11 | 7,5 | 2,5 | 30 | 6,0 |
| 31 | 0,083 | -- | 0,0524 | 11 | 11,5 | 3,5 | 29 | 3,6 |
| 32 | 0,083 | 0,515 | | 11 | 7,5 | 2,5 | 30 | 6 |

TABLEAU VI -

| Réticulation des copolymères de chlorure de vinyle et de l'acétate de vinyle en phase statique par les alcoolates organométalliques de l'étain | | | | | | |
|---|---|---|---|---|---|---|
| Exemple | Système réticulant : mole $Kg.^{-1}$ | | | | Rapport molaire acétate/étain | Taux de gonflement dans le THF après 48 heures (%) |
| | Oxyde d'étain : | | | | | |
| | Diméthyle | Dibutyle | Diphényle | Triphényle | | |
| 33 | 0,403 | - | - | - | 3,2 | 19 |
| 34 | 0,64 | - | - | - | 2 | 25 |
| 35 | - | 0,403 | - | - | 3,2 | 21 |
| 36 | - | 0,64 | - | - | 2,0 | 29 |
| 37 | - | - | 0,403 | - | 3,2 | 23 |
| 38 | - | - | - | 0,241 | 5,3 | 9,5 |

Pour les exemples 19 et 28 le taux de polymère insoluble dans le tétrahydrofuranne est de l'ordre de 100 %. Il est supérieur à 50 % dans les autres cas. Pour les essais en conditions statiques (tableau VI), les taux de polymères insolubles dans le THF après 5 minutes de chauffage à 205°C sont supérieurs à 95%. Les résultats reportés dans ce tableau VI montrent également qu'il est possible de contrôler la densité de réticulation en jouant sur la concentration de l'oxyde organométallique de l'étain.

Le tableau VII montre qu'il est possible de réticuler également les copolymères de l'éthylène et de l'acétate de vinyle par les alcoolates organométalliques de l'étain selon la présente invention, l'alcoolate étant synthétisé préalablement ou généré in situ par interaction des fonctions esters avec un oxyde d'étain. Pour ces essais, la température du malaxeur est de 205°C et la vitesse de rotation de 50 tours par minute.

Pour tous ces exemples, les taux de polymère insoluble dans le toluène à 110°C sont supérieurs à 50 % et sont proches de 100 % pour les exemples 39 et 40.

Le tableau VIII montre qu'il est possible de réticuler les copolymères éthylène-esters acryliques tel que l'acrylate d'éthyle par les alcoolates organométalliques de l'étain type cyclique (stannooxacycloalcane) selon la présente invention. Pour ces exemples, le copolymère éthylène-acrylate d'éthyle contient 9 % en poids de ce monomère, la température du malaxeur est de 200°C et la vitesse de rotation de 50 tours par minute. Pour ces exemples, les taux de polymère insoluble dans le toluène à 110°C sont inférieurs à 50 %.

Le tableau IX montre que les polyamides peuvent être également réticulés par les alcoolates organométalliques d'étain de type dialcoxy-étain dialcoyle selon la présente invention. Pour cet exemple, le polyamide 12 est fondu à 200°C dans le malaxeur Rheomix 600 et l'alcoolate est ajouté après 10 minutes de malaxage. Après ajout de l'alcoolate, on observe une augmentation de couple de plus de 100 % en moins d'une minute, caractéristique d'une réticulation.

Le tableau X montre que le polyéthylène téréphtalate peut être réticulé par les alcoolates organométalliques d'étain selon la présente invention. Dans cet exemple, l'alcoolate d'étain est synthétisé in situ par interaction de l'oxyde de

dibutylétain avec le tétraacétate de pentaérythritol. Pour cet essai, le polymère, l'oxyde d'étain et le tétraacétate de pentaérythritol sont chauffés à 260°C durant 20 minutes en conditions statiques dans une étuve.

Le tableau XI montre que le polycarbonate peut être réticulé par les alcoolates organométalliques d'étain selon la présente invention. Dans cet exemple, l'alcoolate est synthétisé in situ comme pour l'exemple précédent, par interaction de l'oxyde de dibutylétain avec le tétraacétate de pentaérythritol et la réticulation est réalisée en phase dynamique dans le mélangeur interne Rheomix 600 à 250°C. Après 15 minutes de malaxage à cette température, le taux de polymère insoluble dans le xylène est de 89 %.

Le tableau XII montre que les mélanges de copolymère polychlorure de vinyle-acétate de vinyle et polychlorure de vinyle-esters acryliques sont co-réticulables par les alcoolates organométalliques de l'étain, l'alcoolate étant généré in situ dans ces exemples par interaction entre l'oxyde organométallique de l'étain et les fonctions acétate. Pour ces essais en phase dynamique, le stabilisant thermique est le dibutylétain dithioglycolate d'isooctyle à raison de 2 g pour 100 g de mélange de copolymère, la température du malaxeur Rheomix 600 est 205°C et la vitesse de rotation 50 tours par minute. Pour tous ces essais, le taux de polymère insoluble dans le tétrahydrofuranne à la température ambiante est supérieur à 50 %.

Pour tous les exemples décrits dans le tableau XII, le copolymère polychlorure de vinyle-acétate de vinyle contient 11 % en poids de ce monomère.

Les exemples décrits dans ce tableau montrent enfin l'originalité du procédé selon la présente invention pour réticuler le polychlorure de vinyle en mélangeant deux de ces copolymères et en évitant ainsi les problèmes d'incompatibilité souvent rencontrés dans les mélanges de polymères entre eux ou de polymères et d'additifs.

Le tableau XIII montre que la réticulation des mélanges précédents décrits dans le tableau XII par les alcoolates organométalliques de l'étain est réalisable en conditions statiques à 205°C entre les plateaux d'une presse chauffante maintenant une pression de 10 bars sur le mélange de polymères. Après 5 minutes à cette température, les mélanges sont co-réticulés et les taux de polymère insoluble dans le THF après 48 heures d'immersion sont supérieurs à 95 %. Pour ces exemples, le copolymère PCV-acétate de vinyle contient, comme précédemment, 11 % en poids d'unité acétate de vinyle. Tout comme précédemment, l'alcoolate est synthétisé in situ par interaction des groupements acétate avec l'oxyde de dibutylétain à raison de 0,161 mole par kg de mélange de copolymère. Ces exemples confirment l'originalité du procédé selon l'invention appliqué aux copolymères de polychlorure de vinyle pour réticuler ce polymère.

Le tableau XIV montre que les mélanges de copolymère polychlorure de vinyle-acétate de vinyle avec des copolymères d'esters méthacryliques et acryliques peuvent être co-réticulés par les alcoolates organométalliques de l'étain selon l'invention. Pour ces exemples, le copolymère PCV-acétate de vinyle contient 11 % en poids d'unité acétate de vinyle, le stabilisant utilisé est le stabilisant à l'étain précédemment mis en oeuvre pour les exemples des tableaux XII et XIII avec la même concentration. La température du malaxeur est de 205°C et la vitesse de rotation de 50 tours par minute. Pour ces deux exemples, le taux de copolymère insoluble dans le THF à la température ambiante est supérieure à 50 %.

Le tableau XV montre qu'il est possible de co-réticuler des mélanges de polychlorure de vinyle avec du polyacétate de vinyle ou des copolymères acétate de vinyle-éthylène par les alcoolates organométalliques de l'étain selon la présente invention. Dans ces exemples, l'alcoolate d'étain est synthétisé in situ par interaction de l'oxyde organométallique avec des groupements acétate de vinyle. Le stabilisant utilisé est le dioctylétain dithioglycolate d'isooctyle à raison de 2 g pour 100 g de polymère, la température du malaxeur est maintenue à 205°C et la vitesse de rotation est de 50 tours par minute. Pour ces exemples, le taux de polymère insoluble dans le tétrahydrofuranne à la température ambiante est supérieur à 50 %.

Le tableau XVI montre que les mélanges polychlorure de vinyle-polyacétate de vinyle ou polychlorure de vinyle-copolymère chlorure de vinyle-acétate de vinyle peuvent être co-réticulés en phase statique par les alcoolates organométalliques de l'étain selon la présente invention. Pour ces essais, la température est de 205°C et la pression exercée sur le mélange placé dans le moule entre les plateaux de la presse chauffante est de 10 bars. Le temps de cuisson a été fixé à 5 minutes.

Le tableau XVII rassemble les exemples montrant qu'il est possible de co-réticuler des mélanges de copolymères greffés du polypropylène avec l'acétate de vinyle et des esters acryliques ainsi que des mélanges de polypropylène greffé avec des esters acryliques et des copolymères de l'éthylène et de l'acétate de vinyle par les alcoolates organométalliques de l'étain selon la présente invention. Pour ces exemples, les copolymères de polypropylène greffés sont préparés par greffage radicalaire des monomères vinyliques correspondants initiés à partir de peroxydes greffés sur le polypropylène en lit fluide selon le procédé décrit dans le brevet français N° 81.22802.

Pour tous ces exemples, les mélanges de copolymères greffés du polypropylène avec l'acétate de vinyle et l'acrylate de butyle et les mélanges de copolymères greffés du polypropylène avec l'acrylate de butyle et des copolymères de l'éthylène et de l'acétate de vinyle, sont réalisés à l'aide du malaxeur Rheomix 600 à 200°C par malaxage durant 20 minutes avec une vitesse de rotation de 50 tours par minute. Les mélanges ainsi réalisés sont co-réticulés à 205°C durant 15 minutes dans un moule placé entre les plateaux d'une presse chauffante.

Les taux de polymère insoluble dans le xylène à 140°C sont supérieurs à 50 %. Ces exemples montrent également

l'originalité de la présente invention en tant que procédé de réticulation du polypropylène.

Le tableau XVIII montre qu'il est possible de co-réticuler des mélanges polyamide-copolymère de l'éthylène et de l'acétate de vinyle par les alcoolates organométalliques de l'étain selon la présente invention. Dans cet exemple, le polyamide 12 est fondu à 200°C dans le malaxeur Rheomix 600, la vitesse de rotation étant de 50 tours par minute. Le diméthoxy dibutylétain est alors ajouté et une augmentation de couple est observée instantanément. Celle-ci s'est poursuivie pendant 34 minutes avant d'atteindre une valeur palier. Cette augmentation de couple est l'indice de la réticulation du mélange.

TABLEAU VII -

| *Réticulation des copolymères éthylène - acétate de vinyle en phase dynamique par les alcoolates organométalliques de l'étain* | | | | | | | | | |
|---|---|---|---|---|---|---|---|---|---|
| Exemple | Acétate (%) | Système réticulant : mole.$Kg^{-1}$ | | | | $T_m$ (mn) | $T_i$ (mn) | ΔC (N. m) | $V_R$ (N. m.$mn^{-1}$) |
| | | Ethanedioxy-1,2-dibutylétain | Diméthoxy-dibutylétain | Oxyde d'étain : | | | | | |
| | | | | dibutyle | dioctyle | | | | |
| 39 | 26 | 0,160 | - | - | - | 19 | 5,5 | 20 | 1,48 |
| 40 | 16 | - | 0,160 | - | - | 4 | 0 | 40 | 10,0 |
| 41 | 26 | - | - | 0,28 | - | 20 | 8 | 22 | 1,4 |
| 42 | 26 | - | - | - | 0,28 | 15 | 7,5 | 10 | 1,3 |

TABLEAU VIII -

| *Réticulation des copolymères éthylène-acrylate d'éthyle en phase* dynamique par les alcoolates organométalliques de l'étain. | | | | | | |
|---|---|---|---|---|---|---|
| Exemple | Système réticulant mole.$Kg^{-1}$ | | $T_m$ (mn) | $T_i$ (mn) | ΔC (N.m) | $V_R$ (N.m.$mn^{-1}$) |
| | éthanedioxy-1,2-dialkylétain | | | | | |
| | dibutyle | dioctyle | | | | |
| 43 | 0,16 | - | 13,5 | 6,5 | 5,6 | 0,8 |
| 44 | - | 0,16 | 13,5 | 5,5 | 6,6 | 0,8 |

TABLEAU IX -

| *Réticulation du polyamide 12 par les alcoolates organométalliques d'étain* | | | | |
|---|---|---|---|---|
| Exemple | Système réticulant mole.$kg^{-1}$ | Durée de réticulation (mn) | $\Delta_C$ (N.m) | $V_R$ (N.m.$mn^{-1}$) |
| | Diméthoxydibutylétain | | | |
| 45 | 0,34 | 0,5 | 5,6 | 11,2 |

TABLEAU X -

| *Réticulation du polyéthylène terephtalate en phase statique par les alcoolates organométalliques de l'étain* | | | |
|---|---|---|---|
| Exemple | Système réticulant | | Taux d'insoluble dans le mélange chloroforme tétrachloroéthane 50/50 (%) |
| | Oxyde d'étain tétraacétate | | |
| | dibutyle mole.$Kg^{-1}$ | de pentaerythrol mole.$Kg^{-1}$ | |
| 46 | 0,251 | 0,180 | 50 |

TABLEAU XI -

| *Réticulation du polycarbonate en phase dynamique par les alcoolates organométalliques de l'étain* | | | | |
|---|---|---|---|---|
| Exemple | Système réticulant | | Temps de malaxage (mn) | Taux d'insoluble dans le xylène (%) |
| | Oxyde de dibutylétain mole.$Kg^{-1}$ | tétraacétate de pentaerythrol mole. $Kg^{-1}$ | | |
| 47 | 0,251 | 0,255 | 15 | 89 |

TABLEAU XII -

| *Co-réticulation de mélanges de copolymères du chlorure de vinyle et de l'acétate de vinyle et d'esters acryliques* | | | | | | | | | |
|---|---|---|---|---|---|---|---|---|---|
| Exemple | Nature et composition du copolymère PVC-ester acrylique | Composition du mélange | | Oxyde d'étain | | $T_m$ (mn) | $T_i$ (mn) | ΔC (N. m) | $V_R$ (N.m. $mn^{-1}$) |
| | | PVC acétate (%) | -PVC ester acrylique (%) | dibutyle | dioctyle | | | | |
| | | | | mole.$Kg^{-1}$ | | | | | |
| 48 | Acrylate d'éthyle-2-hexyle 23 % | 67,5 | 32,5 | - | 0,083 | 12,5 | 6,5 | 26 | 4,4 |
| 49 | Acrylate de méthyle 10 % | 65 | 35 | - | 0,083 | 8,5 | 4 | 18,6 | 1,6 |
| 50 | Acrylate de méthyle 10 % | 65 | 35 | 0,083 | - | 8,5 | 5 | 7,6 | 2,2 |

TABLEAU XIII -

| *Réticulation des mélanges de copolymères du chlorure de vinyle et de l'acétate de vinyle et de chlorure de vinyle et d'esters acryliques en condition statique par les alcoolates organométalliques de l'étain* | | | | | |
|---|---|---|---|---|---|
| Exemple | Nature et composition du copolymère PVC-ester acrylique | Composition du mélange | | Rapport Acétate/ acrylate | Taux de gonflement dans le THF (%) |
| | | PVC-acétate (%) | PVC-ester acrylique (%) | | |
| 51 | acrylate de méthyle 10 % | 50 | 50 | 1,1 | 22 |
| 52 | acrylate de méthyle 10 % | 60 | 40 | 1,67 | 12,4 |
| 53 | acrylate d'éthyle-2-hexyle 23 % | 67,5 | 32,5 | 2,15 | 25 |

TABLEAU XIV -

*Co-réticulation de mélanges de copolymères du chlorure de vinyle et de l'acétate de vinyle et de copolymères d'ester acrylique et méthacrylique par les alcoolates organométalliques de l'étain*

| Exemple | Nature et composition du copolymère d'ester acrylique et méthacrylique | Composition du mélange | | Oxyde d'étain dibutyle mole. $Kg^{-1}$ | $T_m$ (mn) | $T_i$ (mn) | ΔC (N. m) | $V_R$ (N.m. $mn^{-1}$) |
|---|---|---|---|---|---|---|---|---|
| | | PVC-acétate (%) | PVC ester acrylique et méthacrylique (%) | | | | | |
| 54 | acrylate de méthyle 60 % méthacrylate de méthyle 40 % | 89 | 11 | 0,086 | 9 | 5 | 24 | 4 |
| 55 | acrylate de méthyle 60 % méthacrylate de méthyle 40 % | 87,3 | 12,7 | 0,088 | 9,5 | 5,5 | 16,8 | 4,2 |

TABLEAU XV -

*Co-réticulation de mélanges polychlorure de vinyle - polyacétate de vinyle ou copolymère de l'acétate de vinyle par les alcoolates organométalliques de l'étain*

| Exemple | Composition du mélange | | | Système réticulant mole.$Kg^{-1}$ | | $T_m$ (mn) | $T_i$ (mn) | ΔC (N.m) | $V_R$ (N.m. $mn^{-1}$) |
|---|---|---|---|---|---|---|---|---|---|
| | PVC (%) | Polyacétate de vinyle (%) | Copolymère éthylène acétate de vinyle 45 % en poids (%) | Oxyde d'étain : | | | | | |
| | | | | dibutyle | triphényle | | | | |
| 56 | 70 | 30 | - | 0,40 | - | 11 | 5 | 38 | 6,3 |
| 57 | 80 | -- | 20 | | 0,083 | 6,5 | 4,5 | 4,8 | 2,4 |

Tableau XVI

*Co-réticulation de mélanges polychlorure de vinyle - polyacétate de vinyle ou polychlorure de vinyle - Copolymère chlorure de vinyle - acétate de vinyle en condition statique par les alcoolates organométalliques de l'étain*

| Exemple | Composition du mélange | | | Système réticulant mole.$Kg^{-1}$ | | Taux d'insoluble dans le THF(%) |
|---|---|---|---|---|---|---|
| | PVC | Polyacétate de vinyle | Copolymère PVC acétate de vinyle 11 % | Oxyde d'étain : | | |
| | | | | dibutyle | triphényle | |
| 58 | 70 | 30 | -- | 0,273 | -- | 77 |
| 59 | 50 | -- | 50 | | 0,251 | 78 |

Tableau XVII -

Co-réticulation des mélanges de copolymères greffés du polypropylène avec des esters acryliques et l'acétate de vinyle ainsi que des mélanges de copolymères greffés du polypropylène avec des esters acryliques et des copolymères éthylène-acétate de vinyle ou des polyesters acryliques par les alcoolates organométalliques de l'étain.

| Exemple | Nature et composition pondérale des copolymères du polypropylène | Composition pondérale des mélanges Copolymère du polypropylène (%) | Copolymère éthylène-acétate de vinyle à 16,7 % | Système réticulant: mole.$kg^{-1}$ | | | |
|---|---|---|---|---|---|---|---|
| | | | | Oxyde de dibutylétain | éthanedioxy-1,2-dibutylétain | Acétate/Acrylate | Taux d'Insoluble dans le xylène à 140°C |
| 60 | Polypropylène-acétate de vinyle 15,6 % | 50 | | 0,33 | - | 1,74 | 79 |
| | Polypropylène-acrylate de butyle 16,5 % | 50 | | | | | |
| 61 | Polypropylène-acrylate de butyle 18,8 % | 91 | 9 | 0,30 | - | 0,58 | 70 |
| 62 | Polypropylène-acrylate de butyle à 8,5 % | 91 | 9 | 0,30 | - | 0,24 | 64 |
| 63 | Polypropylène acrylate de butyle à 8,5 % | 91 | 9 | | 0,258 | | 81 |

Tableau XVIII -

| *Co-réticulation des mélanges polyamide - copolymère de l'éthylène et de l'acétate de vinyle par les alcoolates organométalliques de l'étain en phase dynamique* | | | | | | |
|---|---|---|---|---|---|---|
| Exemple | Composition pondérale du mélange | | Système réticulant : $mole.Kg^{-1}$ | $T_m$ (mn) | ΔC (N.m) | $V_R$ ($N.m.mn^{-1}$) |
| | Polyamide 12 | Copolymère éthylène-acétate à 16 % | diméthoxydibutylétain | | | |
| 64 | 21 | 79 | 0,96 | 34 | 12,46 | 0,37 |

**Revendications**

**1.** Procédé de réticulation de polymères ou copolymères ((co)polymères) comportant des groupements chloro, ester, NH ou carbonate, caractérisé en ce que l'on fait réagir avec ledit (co)polymère entre 100 et 300°C et en l'absence de solvant, de savon métallique et de plastifiant un dérivé de type alcoolate organométallique des formules

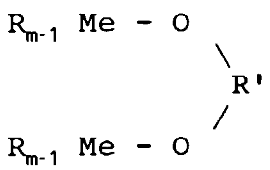

ou

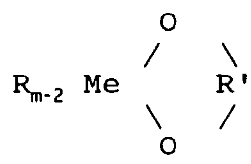

ou

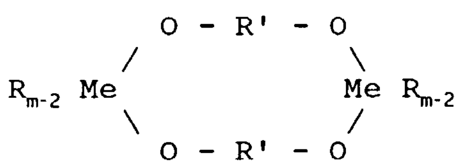

ou

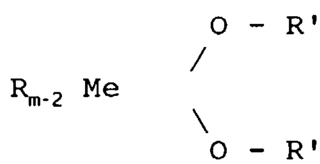

dans lesquelles :

Me représente un atome d'étain, de plomb, de bismuth ou d'antimoine,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 12 atomes de carbone éventuellement substitué par un radical méthyl, éthyl, méthoxy ou chloro, un radical aralcoyle renfermant de 7 à 14 atomes de carbone ou un radical cycloalcoylalcoyle renfermant de 4 à 8 atomes de carbone,
R' représente un radical dérivé d'un radical alcoyle linéaire ou ramifié comportant de 1 à 20 atomes de carbone, d'un radical aralcoyle renfermant de 8 à 15 atomes de carbone, d'un radical cycloalcoyle renfermant de 3 à 12 atomes de carbone, d'un radical cycloalcoylalcoyle renfermant de 4 à 8 atomes de carbone, d'un radical arylcycloalcoyle renfermant de 10 à 20 atomes de carbone ou d'une chaîne polymère, ledit radical R' étant éventuellement fonctionnalisé par une fonction éther, thioéther ou hydroxyle,
m est égal à 4 lorsque Me représente l'étain ou le plomb,
et m est égal à 5 lorsque Me représente le bismuth ou l'antimoine.

**2.** Procédé selon la revendication 1, caractérisé en ce que l'on met en oeuvre un (co)polymère chloré.

**3.** Procédé selon la revendication 1, caractérisé en ce que l'on met en oeuvre un (co)polymère d'ester acrylique ou méthacrylique.

**4.** Procédé selon la revendication 1, caractérisé en ce que l'on met en oeuvre un (co)polymère de l'acétate de vinyle.

**5.** Procédé selon la revendication 1, caractérisé en ce que l'on met en oeuvre un (co)polymère comportant des fonctions NH.

**6.** Procédé selon la revendication 1, caractérisé en ce que l'on met en oeuvre un polycarbonate.

**7.** Procédé selon la revendication 1, caractérisé en ce que l'on met en oeuvre un polyester.

**8.** Procédé selon la revendication 1, caractérisé en ce que l'on met en oeuvre un (co)polymère du polychlorure de vinyle.

**9.** Procédé selon la revendication 1, caractérisé en ce que l'on met en oeuvre un copolymère éthylène acétate de vinyle.

**10.** Procédé selon la revendication 1, caractérisé en ce que l'on met en oeuvre un polypropylène chloré ou greffé acétate de vinyle et/ou ester acrylique ou méthacrylique.

**11.** Procédé selon la revendication 1, caractérisé en ce que l'on met en oeuvre un polyamide.

**12.** Procédé selon la revendication 1, caractérisé en ce que le dérivé de type organométallique est synthétisé in situ.

**13.** Compositions réticulables, exemptes de solvant, de savon métallique et de plastifiant, caractérisées en ce qu'elles comprennent un (co)polymère comportant des groupements chloro, ester, NH, ou carbonate, et un dérivé de type alcoolate organométallique des formules

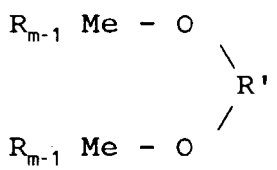

ou

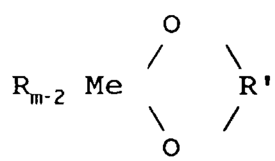

ou

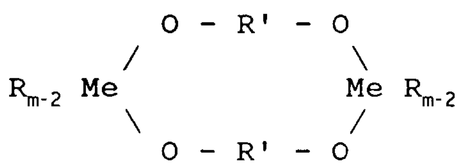

ou

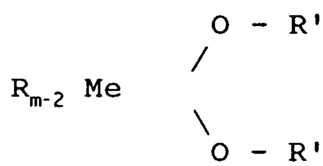

dans lesquelles :

Me représente un atome d'étain, de plomb, de bismuth ou d'antimoine,
R représente un radical alcoyle linéaire ou ramifié renfermant de 1 à 8 atomes de carbone, un radical cycloalcoyle renfermant de 3 à 12 atomes de carbone, un radical aryle renfermant de 6 à 12 atomes de carbone éventuellement substitué par un radical méthyl, éthyl, méthoxy ou chloro, un radical aralcoyle renfermant de 7 à 14 atomes de carbone ou un radical cycloalcoylalcoyle renfermant de 4 à 8 atomes de carbone,
R' représente un radical dérivé d'un radical alcoyle linéaire ou ramifié comportant de 1 à 20 atomes de carbone, d'un radical aralcoyle renfermant de 8 à 15 atomes de carbone, d'un radical cycloalcoylalcoyle renfermant de 4 à 8 atomes de carbone, d'un radical cycloalcoyle renfermant de 3 à 12 atomes de carbone, un radical arylcycloalcoyle renfermant de 10 à 20 atomes de carbone ou une chaîne polymère, éventuellement fonctionnalisée par une fonction éther, thioéther ou hydroxyle,
m est égal à 4, lorsque Me représente l'étain ou le plomb,
et m est égal à 5 lorsque Me représente le bismuth ou l'antimoine.

**14.** Compositions selon la revendication 13, caractérisées en ce qu'elles renferment un (co)polymère chloré.

**15.** Compositions selon la revendication 13, caractérisées en ce qu'elles renferment un (co)polymère d'ester acrylique ou méthacrylique.

**16.** Compositions selon la revendication 13, caractérisées en ce qu'elles renferment un (co)polymère de l'acétate de vinyle.

**17.** Compositions selon la revendication 13, caractérisées en ce qu'elles renferment un (co)polymère comportant des fonctions NH.

**18.** Compositions selon la revendication 13, caractérisées en ce qu'elles renferment un polycarbonate.

**19.** Compositions selon la revendication 13, caractérisées en ce qu'elles renferment un polyester.

**20.** Compositions selon la revendication 13, caractérisées en ce qu'elles renferment un (co)polymère de polychlorure de vinyle.

**21.** Compositions selon la revendication 13, caractérisées en ce qu'elles renferment un copolymère éthylène-acétate de vinyle.

**22.** Compositions selon la revendication 13, caractérisées en ce qu'elles renferment un polypropylène chloré ou greffé acétate de vinyle et/ou ester acrylique ou méthacrylique.

**23.** Compositions selon la revendication 13, caractérisées en ce qu'elles renferment un polyamide.

**24.** Compositions selon l'une des revendications 16, 17, 18, 19, 21, 22, 23, caractérisées en ce qu'elles comprennent un oxyde organométallique de l'étain, du plomb, de l'antimoine ou du bismuth.

**Patentansprüche**

**1.** Verfahren zum Vernetzen von Polymeren oder Copolymeren [(Co)Polymeren], die Chlor-, Ester-, NH- oder Carbonatgruppen umfassen, dadurch gekennzeichnet, daß man mit diesem (Co)Polymer zwischen 100 und 300°C und in Abwesenheit von Lösungsmittel, Metallseife und Weichmacher ein Derivat vom Typ eines Organometallalkoholates der Formeln

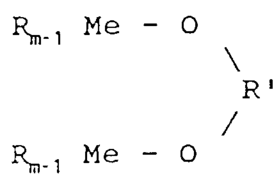

oder

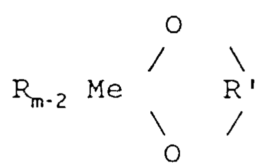

oder

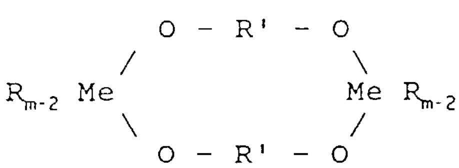

oder

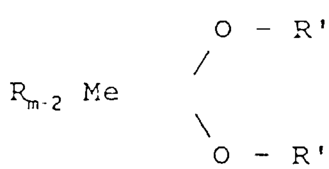

in welchen:

Me ein Zinn-, Blei-, Bismut- oder Antimonatom bedeutet,
R einen linearen oder verzweigten Alkylrest mit 1 bis 8 C-Atomen, einen Cycloalkylrest mit 3 bis 12 C-Atomen, einen Arylrest mit 6 bis 12 C-Atomen, der gegebenenfalls durch einen Methyl-, Ethyl-, Methoxy- oder Chlorrest

substituiert ist, einen Aralkylrest mit 7 bis 14 C-Atomen oder einen Cycloalkylalkylrest mit 4 bis 8 C-Atomen bedeutet,
R' einen Rest bedeutet, der von einem linearen oder verzweigten Alkylrest mit 1 bis 20 C-Atomen, einem Aralkylrest mit 8 bis 15 C-Atomen, einem Cycloalkylrest mit 3 bis 12 C-Atomen, einem Cycloalkylalkylrest mit 4 bis 8 C-Atomen, einem Arylcycloalkylrest mit 10 bis 20 C-Atomen oder einer polymeren Kette abgeleitet ist, wobei der Rest R' gegebenenfalls durch eine Ether-, Thioether- oder Hydroxylfunktion funktionalisiert ist,
m gleich 4 ist, wenn Me für Zinn oder Blei steht und
m gleich 5 ist, wenn Me für Bismut oder Antimon steht, umsetzt.

2. Verfahren nach Anspruch 1, dadurch gekennzeichnet, daß man ein chloriertes (Co)Polymer verwendet.

3. Verfahren nach Anspruch 1, dadurch gekennzeichnet, daß man ein (Co)Polymer von Acryl- oder Methacrylester verwendet.

4. Verfahren nach Anspruch 1, dadurch gekennzeichnet, daß man ein (Co)Polymer von Vinylacetat verwendet.

5. Verfahren nach Anspruch 1, dadurch gekennzeichnet, daß man ein NH-Funktionen aufweisendes (Co)Polymer verwendet.

6. Verfahren nach Anspruch 1, dadurch gekennzeichnet, daß man ein Polycarbonat verwendet.

7. Verfahren nach Anspruch 1, dadurch gekennzeichnet, daß man einen Polyester verwendet.

8. Verfahren nach Anspruch 1, dadurch gekennzeichnet, daß man ein (Co)Polymer von Polyvinylchlorid verwendet.

9. Verfahren nach Anspruch 1, dadurch gekennzeichnet, daß man ein Ethylen-Vinylacetat-Copolymer verwendet.

10. Verfahren nach Anspruch 1, dadurch gekennzeichnet, daß man ein chloriertes oder Vinylacetat- und/oder Acrylester- oder Methacrylester-gepfropftes Polypropylen verwendet.

11. Verfahren nach Anspruch 1, dadurch gekennzeichnet, daß man ein Polyamid verwendet.

12. Verfahren nach Anspruch 1, dadurch gekennzeichnet, daß das Organometallderivat in situ synthetisiert wird.

13. Vernetzbare Zusammensetzungen, die von Lösungsmittel, Metallseife und Weichmacher frei sind, dadurch gekennzeichnet, daß sie ein (Co)Polymer enthalten, das Chlor-, Ester-, NH- oder Carbonatgruppen umfaßt und ein Derivat vom Typ eines Organometallalkoholates der Formeln

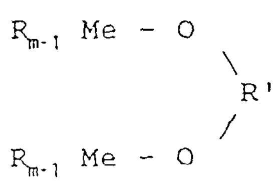

oder

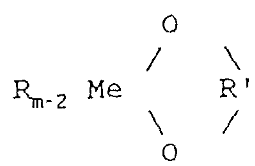

oder

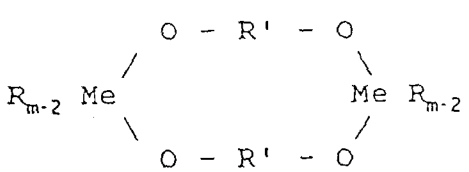

oder

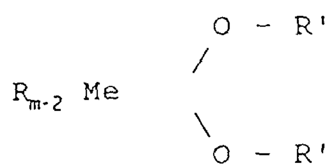

in welchen:

Me ein Zinn-, Blei-, Bismut- oder Antimonatom bedeutet,
R einen linearen oder verzweigten Alkylrest mit 1 bis 8 C-Atomen, einen Cycloalkylrest mit 3 bis 12 C-Atomen, einen Arylrest mit 6 bis 12 C-Atomen, der gegebenenfalls durch einen Methyl-, Ethyl-, Methoxy- oder Chlorrest substituiert ist, einen Aralkylrest mit 7 bis 14 C-Atomen oder einen Cycloalkylalkylrest mit 4 bis 8 C-Atomen bedeutet,
R' einen Rest bedeutet, der von einem linearen oder verzweigten Alkylrest mit 1 bis 20 C-Atomen, einem Aralkylrest mit 8 bis 15 C-Atomen, einem Cycloalkylalkylrest mit 4 bis 8 C-Atomen, einem Cycloalkylrest mit 3 bis 12 C-Atomen, einem Arylcycloalkylrest mit 10 bis 20 C-Atomen oder einer polymeren Kette abgeleitet ist, wobei der Rest R' gegebenenfalls durch eine Ether-, Thioether- oder Hydroxylfunktion funktionalisiert ist,
m gleich 4 ist, wenn Me für Zinn oder Blei steht und
m gleich 5 ist, wenn Me für Bismut oder Antimon steht.

**14.** Zusammensetzungen nach Anspruch 13, dadurch gekennzeichnet, daß sie ein chloriertes (Co)Polymer umfassen.

**15.** Zusammensetzungen nach Anspruch 13, dadurch gekennzeichnet, daß sie ein (Co)Polymer von Acryl- oder Methacrylester umfassen.

**16.** Zusammensetzungen nach Anspruch 13, dadurch gekennzeichnet, daß sie ein (Co)Polymer von Vinylacetat umfassen.

**17.** Zusammensetzungen nach Anspruch 13, dadurch gekennzeichnet, daß sie ein NH-Funktionen aufweisendes (Co) Polymer umfassen.

**18.** Zusammensetzungen nach Anspruch 13, dadurch gekennzeichnet, daß sie ein Polycarbonat umfassen.

**19.** Zusammensetzungen nach Anspruch 13, dadurch gekennzeichnet, daß sie einen Polyester umfassen.

**20.** Zusammensetzungen nach Anspruch 13, dadurch gekennzeichnet, daß sie ein (Co)Polymer von Polyvinylchlorid umfassen.

**21.** Zusammensetzungen nach Anspruch 13, dadurch gekennzeichnet, daß sie ein Ethylen-Vinylacetat-Copolymer umfassen.

**22.** Zusammensetzungen nach Anspruch 13, dadurch gekennzeichnet, daß sie ein chloriertes oder Vinylacetat- und/ oder Acrylester- oder Methacrylester-gepfropftes Polypropylen umfassen.

**23.** Zusammensetzungen nach Anspruch 13, dadurch gekennzeichnet, daß sie ein Polyamid umfassen.

**24.** Zusammensetzungen nach Anspruch einem der Ansprüche 16, 17, 18, 19, 21, 22, 23, dadurch gekennzeichnet, daß sie ein Organometalloxid von Zinn, Blei, Antimon oder Bismut umfassen.

## Claims

**1.** Process for cross-linking polymers or copolymers ((co)polymers) containing chloro, ester, NH or carbonate groups, characterised in that there is reacted with the said (co)polymer, between 100 and 300°C and in the absence of solvent, metal soap and plasticiser, a derivative of the organometallic alcoholate type of formulae

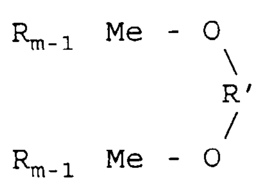

or

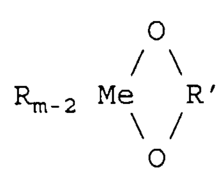

or

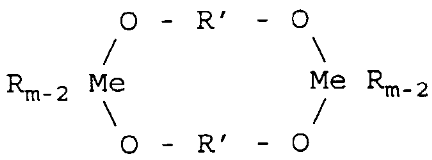

or

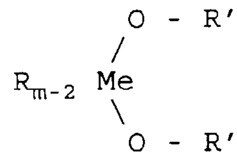

in which:

Me represents a tin, lead, bismuth or antimony atom,

R represents a linear or branched alkyl radical containing 1 to 8 carbon atoms, a cycloalkyl radical containing 3 to 12 carbon atoms, an aryl radical containing 6 to 12 carbon atoms optionally substituted by a methyl, ethyl, methoxy or chloro radical, an aralkyl radical containing 7 to 14 carbon atoms or a cycloalkylalkyl radical containing 4 to 8 carbon atoms,

R' represents a radical derived from a linear or branched alkyl radical containing 1 to 20 carbon atoms, an aralkyl radical containing 8 to 15 carbon atoms, a cycloalkyl radical containing 3 to 12 carbon atoms, a cycloalkylalkyl radical containing 4 to 8 carbon atoms, an arylcycloalkyl radical containing 10 to 20 carbon atoms or a polymer chain, the said radical R' being optionally functionalised by an ether, thioether or hydroxyl function,

m is equal to 4 when Me represents tin or lead,

and m is equal to 5 when Me represents bismuth or antimony.

**2.** Method according to Claim 1, characterised in that a chlorinated (co)polymer is used.

**3.** Method according to Claim 1, characterised in that a (co)polymer of acrylic or methacrylic ester is used.

**4.** Method according to Claim 1, characterised in that a (co)polymer of vinyl acetate is used.

**5.** Method according to Claim 1, characterised in that a (co)polymer comprising NH functions is used.

**6.** Method according to Claim 1, characterised in that a polycarbonate is used.

**7.** Method according to Claim 1, characterised in that a polyester is used.

**8.** Method according to Claim 1, characterised in that a (co)polymer of polyvinyl chloride is used.

**9.** Method according to Claim 1, characterised in that a ethylene-vinyl acetate copolymer is used.

**10.** Method according to Claim 1, characterised in that a chlorinated or grafted vinyl acetate and/or acrylic or methacrylic ester polypropylene is used.

**11.** Method according to Claim 1, characterised in that a polyamide is used.

**12.** Method according to Claim 1, characterised in that the derivative of an organometallic type is synthesised in situ.

**13.** Cross-linkable compositions, free of solvent, metal soap and plasticiser, characterised in that they comprise a (co) polymer containing chloro, ester, NH or carbonate groups, and a derivative of the organometallic alcoholate type of formulae

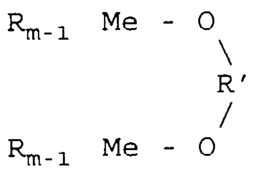

or

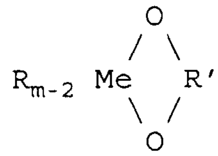

or

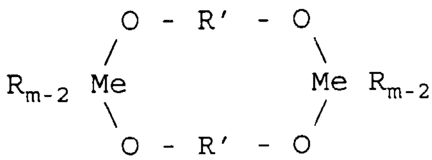

or

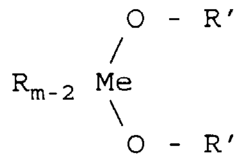

in which:

Me represents a tin, lead, bismuth or antimony atom,

R represents a linear or branched alkyl radical containing 1 to 8 carbon atoms, a cycloalkyl radical containing 3 to 12 carbon atoms, an aryl radical containing 6 to 12 carbon atoms optionally substituted by a methyl, ethyl, methoxy or chloro radical, an aralkyl radical containing 7 to 14 carbon atoms or a cycloalkylalkyl radical containing 4 to 8 carbon atoms,

R' represents a radical derived from a linear or branched alkyl radical containing 1 to 20 carbon atoms, an aralkyl radical containing 8 to 15 carbon atoms, a cycloalkylalkyl radical containing 4 to 8 carbon atoms, a cycloalkyl radical containing 3 to 12 carbon atoms, an arylcycloalkyl radical containing 10 to 20 carbon atoms or a polymer chain, optionally functionalised by an ether, thioether or hydroxyl function,

m is equal to 4 when Me represents tin or lead,

and m is equal to 5 when Me represents bismuth or antimony.

**14.** Compositions according to Claim 13, characterised in that they contain a chlorinated (co)polymer.

**15.** Compositions according to Claim 13, characterised in that they contain a (co)polymer of acrylic or methacrylic ester.

**16.** Compositions according to Claim 13, characterised in that they contain a (co)polymer of vinyl acetate.

**17.** Compositions according to Claim 13, characterised in that they contain a (co)polymer comprising NH functions.

**18.** Compositions according to Claim 13, characterised in that they contain a polycarbonate.

**19.** Compositions according to Claim 13, characterised in that they contain a polyester.

**20.** Compositions according to Claim 13, characterised in that they contain a (co)polymer of polyvinyl chloride.

**21.** Compositions according to Claim 13, characterised in that they contain a ethylene-vinyl acetate copolymer.

**22.** Compositions according to Claim 13, characterised in that they contain a chlorinated or grafted vinyl acetate and/or acrylic or methacrylic ester polypropylene.

**23.** Compositions according to Claim 13, characterised in that they contain a polyamide.

**24.** Compositions according to one of Claims 16, 17, 18, 19, 21, 22, 23, characterised in that they comprise an organometallic oxide of tin, led, antimony or bismuth.